# EUROPÄISCHE PATENTSCHRIFT

(11) **EP 1 686 637 B1**
(45) Veröffentlichungstag und Bekanntmachung des Hinweises auf die Patenterteilung: **15.02.2017**
(21) Anmeldenummer: 05027565.0
(22) Anmeldetag: 16.12.2005
(51) Int. Cl.: H01M 2/10

(54) **Anordnung von mehreren elektrischen Energiespeichern eines KFZ**
Arrangement of several energy storage unity in a vehicle
Arrangement de plusieurs accumulateurs d'énergie dans un véhicule

(30) Priorität: 22.12.2004 DE 102004062991
(43) Veröffentlichungstag der Anmeldung: 02.08.2006
(73) Patentinhaber: MAN Truck & Bus AG, 80995 München (DE)
(72) Erfinder: Beck, Klaus, Dipl.-Ing./Dipl.-Des., 82216 Gernlinden (DE); Übelacker, Andreas, Dipl.-Ing., 82282 Unterschweinbach (DE); Neukam, Michael, Dipl.-Ing., 82110 Germering (DE)
(74) Vertreter: Liebl, Thomas

(56) Entgegenhaltungen:
- DE-C- 19 161
- US-A- 3 667 563
- US-A- 3 821 997
- US-A- 4 074 786
- US-A- 4 779 692
- US-A- 5 593 167
- US-A1- 2002 017 407
- US-B1- 6 345 677

## Beschreibung

Die vorliegende Erfindung betrifft eine Anordnung von mehreren elektrischen Energiespeichern eines Nutzfahrzeuges.

Moderne Nutzfahrzeuge weisen eine Vielzahl von Ausstattungsbauteilen auf, die mit zunehmender Anzahl zu Platzproblemen bei ihrer Anordnung führen können. Aus diesem Grund ist generell eine möglichst Platz sparende Unterbringung solcher Teile wie Kraftstofftank, Druckversorgungsanlage, Abgasanlage und elektrischer Energiespeicherausrüstung notwendig. Bei einem Nutzfahrzeug mit einem Fahrgestell in Rahmenbauweise sind die erwähnten Baugruppen typischerweise in einem Bereich außerhalb der Rahmenlängsträger untergebracht.

Aus der US 3 821 997 A sind Fahrzeugbatterien bekannt, die untereinander angeordnet und auf rahmenfesten Halteböden befestig sind.

Zur möglichst Platz sparenden Unterbringung einer als elektrische Energiespeichereinrichtung fungierende Starterbatterie in einem Nutzfahrzeug ist es bekannt, diese in einem Batteriekasten unterzubringen, der gleichzeitig mit Trittstufen bzw. Trittflächen zum Besteigen des Fahrzeuges versehen ist. Eine derartige Batteriekastenabdeckung ist bspw. aus der DE 196 09 497 C2 bekannt. Auf diese Weise kann der ansonsten zusätzlich zu berücksichtigende Einbauraum für Trittstufen bzw. eine Leiter eingespart werden.

Werden größere Batteriekapazitäten benötigt, so können mehrere Akkumulatoren im Fahrzeug eingebaut werden, die in Reihe oder in Serie verschaltet sind. Für eine Anordnung mehrer Batterien nebeneinander fehlt meist der zur Verfügung stehende Einbauraum. Eine Anordnung mehrerer Batterien übereinander ist bereits bei Flurförderfahrzeugen bekannt. So zeigt die DE 297 06 843 U1 eine Anordnung zur Bereitstellung einer möglichst großen Batteriekapazität, bei der zwei oder mehr Batterien übereinander angeordnet und in Reihe verschaltet sind.

Problematisch bei einer solchen Anordnung von mehreren Batterien übereinander ist jedoch die Zugänglichkeit der einzelnen Batterien zu Wartungszwecken. Insbesondere die unten liegenden Batterien sind nur schwer zugänglich. Da sich oftmals aus Gründen der Zuverlässigkeit und aus Kostengründen keine wartungsfreien Batterien einsetzen lassen, müssen die Batterien zugänglich bleiben, bspw. zum Laden und/oder zum Überprüfen des Säurestandes.

Ein vorrangiges Ziel der vorliegenden Erfindung besteht darin, eine Anordnung von mindestens zwei gestapelten elektrischen Energiespeichern für Fahrzeuge, sog. Fahrzeugbatterien, zur Verfügung zu stellen, bei der eine ausreichende Zugänglichkeit der Energiespeicher für Wartungsarbeiten gewährleistet ist.

Dieses Ziel der Erfindung wird mit dem Gegenstand des unabhängigen Anspruchs erreicht. Merkmale vorteilhafter Weiterbildungen der Erfindung ergeben sich aus den abhängigen Ansprüchen.

Eine erfindungsgemäße Anordnung mit mindestens zwei übereinander gestapelten elektrischen Energiespeichern eines Fahrzeuges sieht einen in horizontaler Richtung verschiebbaren zuunterst angeordneten Energiespeicher vor, der unter einem darüber angeordneten Energiespeicher zumindest teilweise herausziehbar ist. Die erfindungsgemäße Anordnung eignet sich insbesondere zur Verwendung bei Nutzfahrzeugen mit separatem Leiterrahmen, bei denen kompakte Einbaumaße zur Platz sparenden Unterbringung aller Anbauteile wie Kraftstofftank, Abgasanlage, etc. wichtig sind. Die übereinander angeordnete Einbaulage der zwei oder mehr elektrischen Energiespeicher ermöglicht einen Platz sparenden Anbau im Bereich unterhalb oder hinter einer Fahrerkabine, bspw. in unmittelbarer Nähe eines Abgasschalldämpfers und/oder eines Kraftstofftanks. Die schlechte Zugänglichkeit des unteren Energiespeichers kann dadurch behoben werden, dass dieser zumindest teilweise in horizontaler Richtung herausziehbar ist, so dass er für Wartungszwecke und/oder zum Austausch zugänglich gemacht werden kann.

Zur besseren Abstützung ist der zuunterst angeordnete Energiespeicher in seiner herausgezogenen Lage unter dem darüber angeordneten Energiespeicher auf einer klappbaren Stützeinrichtung absetzbar. Diese klappbare Stützeinrichtung kann in vorteilhafter Weise als Steighilfe ausgebildet sein und zu diesem Zweck mindestens eine, vorzugsweise jedoch zwei oder mehr Trittstufen zum Besteigen des Rahmens des Fahrzeuges aufweisen.

Die Anordnung der gestapelten elektrischen Energiespeicher im Bereich eines Rahmens des Nutzfahrzeuges ermöglicht eine vorteilhafte zusätzliche Nutzung als Auflage für Trittstufen, die ein Besteigen des Fahrzeuges ermöglichen.

Die mindestens zwei elektrischen Energiespeicher sind vorzugsweise in einem Gehäuserahmen gehalten, der an einem Rahmenabschnitt des Fahrzeuges befestigbar, insbesondere verschraubbar ist. Auf diese Weise wird ein Batteriemodul gebildet, das über wenige Befestigungspunkte mit dem Rahmen des Fahrzeuges verbindbar ist. Das Modul kann auf einfache Weise vorgefertigt und anschließend am Fahrzeug verschraubt werden.

Der zuoberst angeordnete Energiespeicher kann vorzugsweise auf einer Halteplattform ruhen, die fest im Gehäuserahmen verankert ist. Der zuunterst angeordnete Energiespeicher kann hingegen in einem verschiebbaren Gehäuseteil angeordnet sein, der starr am Gehäuserahmen fixierbar und nach Lösen einer Feststelleinrichtung in horizontaler Richtung gegenüber dem Gehäuserahmen verschoben werden kann. Anstelle des als verschiebbare Schublade ausgestalteten unteren Gehäuseteils kann dieses auch als starre Aufnahme ausgebildet sein, aus dem der untere Energiespeicher bei Bedarf noch vorne heraus gezogen werden kann. In diesem Fall genügt es, zunächst die Verankerung der Batterie zu lösen, die während der Fahrt ein Verrutschen der Batterie verhindert. Sobald die Verankerung gelöst ist, kann die untere Batterie unterhalb der darüber liegenden oberen Batterie herausgezogen und für Wartungszwecke zugänglich gemacht werden.

Bei starr am Gehäuserahmen fixierter Lage befindet sich der zuunterst angeordnete Energiespeicher in seiner Betriebslage, bspw. wenn das Fahrzeug sich im Betrieb befindet. Zum Herausziehen des zuunterst angeordneten Energiespeichers für Wartungszwecke wird zunächst die Feststelleinrichtung gelöst, wonach die Batterie nach vorne unter der darüber liegenden Batterie herausgezogen werden kann. Als Feststelleinrichtung kommt bspw. eine mittels Schrauben befestigbare Klemmeinrichtung o. dgl. in Frage, mittels derer sich die Batterien weitgehend spielfrei im Gehäuserahmen fixieren lassen. Eine besonders einfache Handhabbarkeit des verschiebbaren unteren Energiespeichers ergibt sind durch Verwendung einer Gleitführung, mittels derer der Energiespeicher am Gehäuserahmen aufgehängt sein kann. Auf diese Weise kann der Energiespeicher nach Lösen der Klemmeinrichtung leicht nach außen gezogen und ggf. auf der zuvor nach unten geklappten Stützeinrichtung abgesetzt werden.

Eine weitere bevorzugte Ausführungsform der Erfindung sieht eine oberhalb des zuoberst angeordneten Energiespeichers angeordnete Trittplattform vor, die ein Begehen des Raumes oberhalb der Energiespeicher ermöglicht. Auf diese Weise kann der am Fahrzeug zur Verfügung stehende Einbauraum in optimaler Weise mehrfach genutzt werden. Die Trittplattform kann insbesondere einen mit dem Gehäuserahmen verbundenen und aufklappbaren Batteriekastendeckel bilden. Vorzugsweise ist die Trittplattform in ihrer den zuoberst angeordneten Energiespeicher abdeckenden horizontalen Lage verriegelbar. Auf diese Weise kann gewährleistet werden, dass der Energiespeicher nach oben hin abgedeckt bleibt, solange er nicht für Wartungszwecke zugänglich gemacht werden muss. Weiterhin kann vorgesehen sein, dass die Verriegelungen der Trittplattform und der Stützeinrichtung miteinander gekoppelt sind, so dass bspw. bei eingekappter Stützeinrichtung die Trittplattform in ihrer horizontalen Lage verriegelt ist. Wird hingegen die Stützeinrichtung mit den daran befindlichen Trittstufen nach vorne ausgeklappt, so kann die Trittplattform ebenfalls nach oben verschwenkt werden, wodurch der obere Energiespeicher zugänglich gemacht werden kann.

Eine weitere Ausführungsform der vorliegenden Erfindung sieht vor, dass die elektrischen Energiespeicher mit einem Fahrzeugbordnetz über elektrische Anschlussleitungen gekoppelt sind, die auch bei herausgezogenem unteren Energiespeicher an diesem angeschlossen bleiben. Die Anschlussleitungen weisen vorzugsweise eine ausreichende Länge auf, die ein Herausziehen des unteren Energiespeichers ermöglicht, ohne dass die Anschlussleitungen hierbei abgeklemmt werden müssen. Auf diese Weise ist eine Kontrolle der unteren Batterie bzw. ein Auffüllen ihrer Zellen ermöglicht, ohne die elektrische Verbindung zum Bordnetz trennen zu müssen.

Eine besonders vorteilhafte Variante der Erfindung sieht ein dem Gehäuserahmen zugeordnetes bzw. dort befestigtes zentrales Elektrikmodul vor, das in Höhe des zuoberst angeordneten Energiespeichers positioniert ist. Das Elektrikmodul kann insbesondere an einer nach außen weisenden Stirnseite des zuoberst angeordneten Energiespeichers angeordnet und zu dessen Entnahme abnehmbar am Gehäuserahmen bzw. am zuoberst angeordneten Energiespeicher gehaltert sein.

Die erfindungsgemäße Anordnung ermöglicht die Verwendung relativ kostengünstiger Bleiakkumulatoren oder anderer Batterien in Nutzfahrzeugen in übereinander gestapelter Bauweise, ohne dass die Zugänglichkeit der einzelnen Batterien nennenswert eingeschränkt wäre. Oftmals werden in Nutzfahrzeugen keine wartungsfreien Batterien eingesetzt, da deren Zuverlässigkeit bei längerer Betriebsdauer als nicht ausreichend angesehen wird. Zudem sind bekannte wartungsfreie Energiespeicher bei den in Nutzfahrzeugen üblichen Kapazitäten erheblich teurer als herkömmliche bzw. sog. wartungsarme Energiespeicher. Da die Energiespeicher durch elektrisch betreibbare Fahrzeugausstattungen wie bspw. Ladebordwände erheblich belastet werden, kann es insbesondere bei tiefen Außentemperaturen leicht zu Startproblemen bzw. zu Kapazitätsengpässen kommen. Bei nicht mehr ausreichender Restspannung muss das Fahrzeug fremdgestartet werden. Hierzu ist eine gute Zugänglichkeit der Energiespeicher von außen notwendig. Zudem muss zum Laden der Batterie und zum Überprüfen des Säurestands jede Zelle geöffnet werden. Daher müssen alle Energiespeicher ohne großen Montageaufwand von oben her über ihre gesamte Länge zugänglich sein. Diese Zugänglichkeit muss möglichst für alle vorhandenen Energiespeicher zum selben Zeitpunkt gegeben sein. Die erfindungsgemäße Anordnung ermöglicht auf einfache und effektive Weise die gleichzeitige Zugänglichkeit der mindestens zwei übereinander angeordneten elektrischen Energiespeicher von oben. Zudem können die Energiespeicher problemlos und ohne großen Montageaufwand entfernt bzw. ausgetauscht werden.

Da moderne Abgasanlagen aufgrund der darin enthaltenen Abgasreinigungseinrichtungen immer voluminöser werden, reicht der zur Verfügung stehende Bauraum bei einer vorgegebenen Fahrzeugbreite oftmals nicht mehr aus, um im Bereich der Abgasanlage zusätzliche Trittstufen mit einer gesetzlich vorgeschriebenen Tiefe von mindestens 150 mm anzubringen. Aus diesem Grund können die Trittstufen vorteilhaft in den erfindungsgemäßen Batteriekasten integriert bzw. an diesem angebracht werden.

Selbstverständlich eignet sich die erfindungsgemäße Anordnung jedoch auch für Einsatzfälle, bei denen keine Trittstufen und/oder Trittplattformen notwendig sind, bspw. bei einem seitlich verkleideten Fahrzeugaufbau o. dgl.

Ein weiterer Vorteil der erfindungsgemäßen Anordnung ist der relativ schmale Einbauraum, da die Energiespeicher mit ihren Schmalseiten quer zur Fahrzeuglängsrichtung angeordnet werden können. Normalerweise reicht der zwischen Rahmenlängsträger und Außenkontur des Fahrzeugs zur Verfügung stehende Einbauraum aus, um die Batterien in ihren ganzen Längen unterbringen zu können. Zudem können meist elektrische Komponenten wie ein Batterietrennschalter, Relais, Sicherungen etc. innerhalb der Anordnung untergebracht werden, bspw. im Bereich der nach außen weisenden Schmalseite der oberen Batterie. Die Energiespeicher können je nach gewünschter Ausstattung mehr oder weniger vollständig abgedeckt sein, so dass die Anordnung sich auch für Gefahrguttransporter eignet, bei denen zur Verhinderung jeglichen Funkenschlags eine vollständige Kapselung der Energiespeicher notwendig ist. Der Batteriekasten kann problemlos absperrbar gemacht werden. Zudem sind die einzelnen Batterien auch bei laufendem Motor leicht zugänglich.

Die Erfindung wird nachfolgend anhand eines bevorzugten Ausführungsbeispiels unter Bezugnahme auf die beiliegenden Zeichnungen näher erläutert.
Fig. 1 zeigt eine schematische Darstellung einer erfindungsgemäßen Anordnung von zwei übereinander platzierten und an einem Rahmenlängsträger eines Nutzfahrzeugrahmens befestigten elektrischen Energiespeichern.
Fig. 2 zeigt eine schematische Perspektivansicht eines ersten Ausführungsbeispiels der erfindungsgemäßen Anordnung.
Fig. 3 zeigt eine schematische Perspektivansicht der Anordnung gemäß Fig. 2 mit nach unten geschwenkten Trittstufen.
Fig. 4 zeigt eine schematische Seitenansicht der Anordnung gemäß Fig. 2.
Fig. 5 verdeutlicht anhand einer weiteren schematischen Perspektivansicht eine mögliche Anordnung von elektrischen Anschlussleitungen.
Fig. 6 zeigt eine schematische Perspektivansicht eines zweiten Ausführungsbeispiels der erfindungsgemäßen Anordnung.
Fig. 7 zeigt eine schematische Seitenansicht der Anordnung gemäß Fig. 6.
Fig. 8 zeigt eine schematische Perspektivdarstellung einer am Fahrzeug platzierten erfindungsgemäßen Anordnung.
Fig. 9 zeigt in einer schematischen Perspektivdarstellung ein Elektrikmodul sowie dessen elektrische Anschlussleitungen.

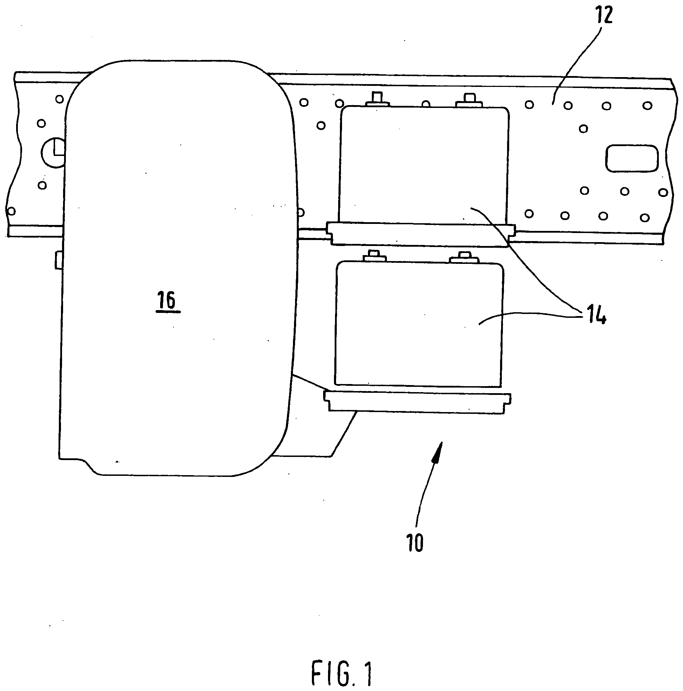

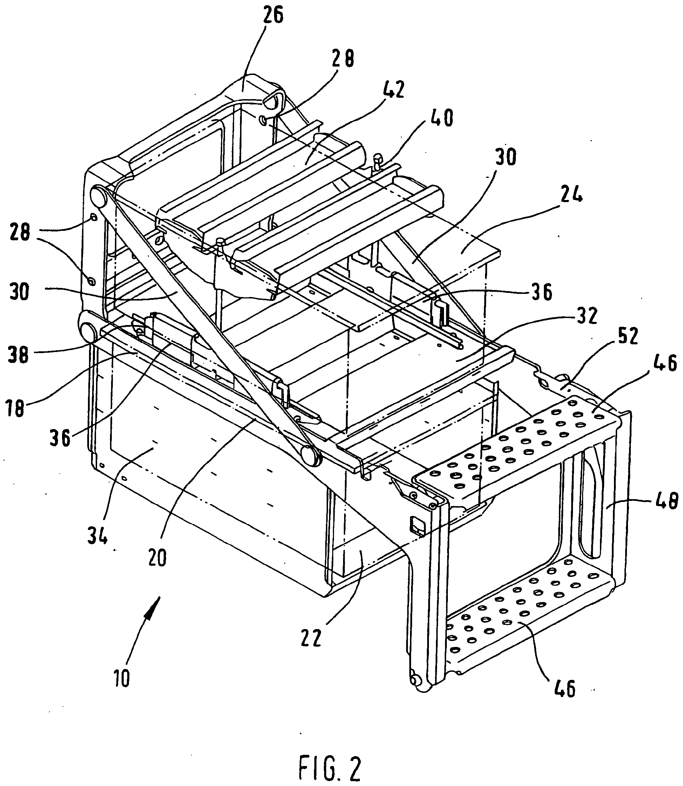

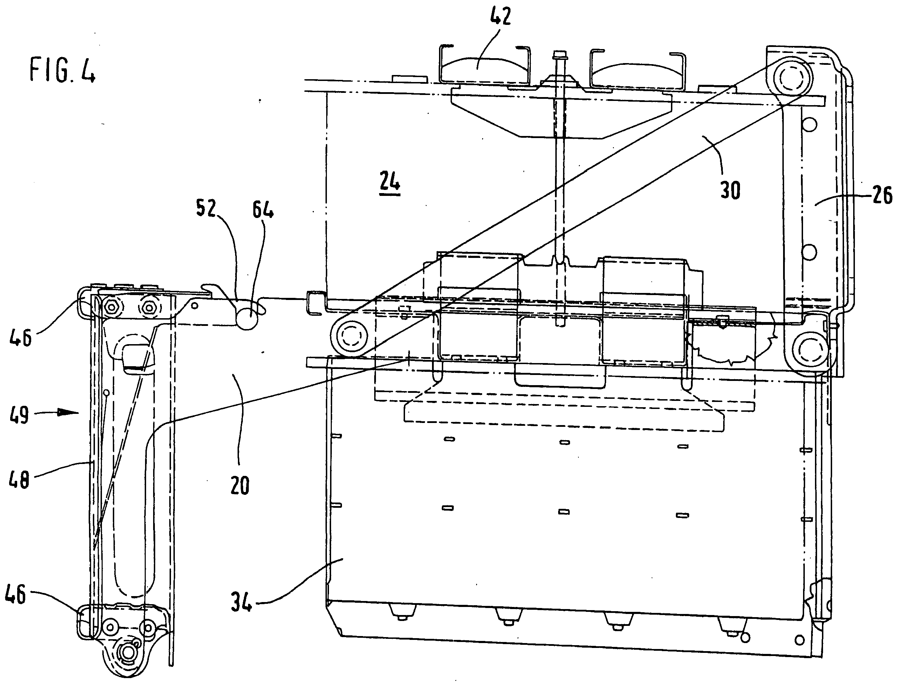

Anhand der Figuren 1 bis 9 werden Ausführungsbeispiele einer erfindungsgemäßen Anordnung 10 von zwei übereinander gestapelten und gemeinsam an einem Rahmenlängsträger 12 eines Nutzfahrzeugrahmens befestigten elektrischen Energiespeichern 14 illustriert. Wie anhand der Fig. 1 verdeutlicht ist, können die elektrischen Energiespeicher 14 durch die Platz sparende Anordnung bspw. in unmittelbarer Nähe eines Schalldämpfers 16 einer Abgasanlage angeordnet werden. Die weiteren Nutzungsmöglichkeiten der erfindungsgemäßen Anordnung 10 sowie deren Verankerung werden anhand der Figuren 2 bis 7 detaillierter erläutert.

So zeigen die Figuren 2 bis 4 eine erste Ausführungsvariante der Anordnung 10, bei der die im Folgenden vereinfacht als Batterien bezeichneten elektrischen Energiespeicher 14 in einem gemeinsamen Gehäuserahmen 18 befestigt sind, der im Wesentlichen aus miteinander verbundenen Rahmenblechen 20 besteht. Zwei dieser sich in horizontaler Richtung und senkrecht zur Längserstreckungsrichtung des Rahmenlängsträgers 12 des Nutzfahrzeugrahmens (vgl. Fig. 1) erstreckenden Rahmenbleche 20 weisen eine L-förmige Kontur auf und flankieren obere Längskanten einer unteren Batterie 22 sowie untere Längskanten einer oberen Batterie 24. An ihren zum Rahmenlängsträger 12 des Nutzfahrzeugrahmens weisenden Rückseiten sind die beiden parallel angeordneten Rahmenbleche 20 über einen Halterahmen 26 verbunden, der im gezeigten Ausführungsbeispiel als tiefgezogenes Blechteil ausgebildet ist, das über geeignete Winkelbleche am Rahmenlängsträger 12 befestigbar ist. Hierzu dienen die Befestigungslöcher 28, die an den vertikalen Abschnitten des Halterahmens 26 vorgesehen sind. Zusätzliche Zugstreben 30 sind am oberen Bereich des Halterahmens 26 sowie an vorderen Bereichen der beiden länglichen Rahmenbleche 20 befestigt, so dass diese der Gewichtsbelastung durch die beiden Batterien 22 und 24 standhalten.

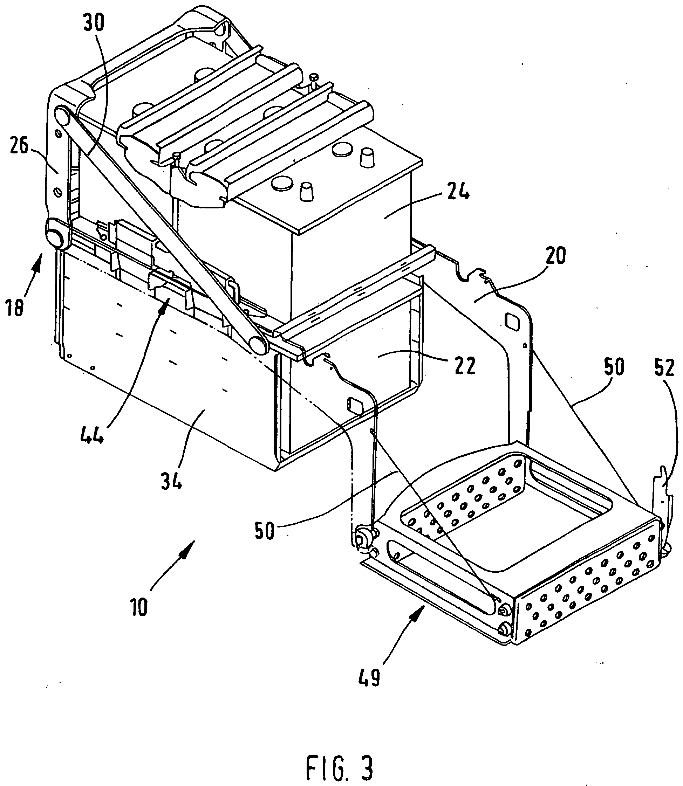

Die obere Batterie 24 ruht auf einer profilierten Halteplattform 32 aus Blech, die gleichzeitig auch eine stabilisierende Verbindung für die beiden L-förmigen Rahmenbleche 20 darstellt. Die untere Batterie 22 ist in einem U-förmigen Gehäuseteil 34 angeordnet, das an den Rahmenblechen 20 aufgehängt ist und von seinen Abmessungen her ungefähr den typischen Abmessungen der unterzubringenden Batterie 22 entspricht. Seitliche Haltelaschen 36, die an den oberen Längskanten des Gehäuseteils 34 für die untere Batterie 22 angeordnet sind, umgreifen längliche Halteschienen 38, die an den Längsseiten der Halteplattform 32 für die obere Batterie 24 verschraubt sind. Die Haltelaschen 36 bilden die Aufhängung für das untere Gehäuseteil 34 sowie für die darin befindliche untere Batterie 22. Nach Lösen von zwei, jeweils in die linke bzw. rechte Halteschiene 38 eindrehbaren Spannschrauben 40 kann ein oberer Klemmbügel 42 gelöst werden, mit dem die obere Batterie 24 befestigt und auf der Halteplattform 32 fixiert ist. Werden die Spannschrauben 40 gelöst, wird gleichzeitig eine Klemmeinrichtung 44 (vgl. Fig. 3) für die untere Batterie 22 gelöst, so dass diese nach vorne in horizontaler Richtung aus ihrem U-förmigen Gehäuseteil 34 geschoben werden kann. Durch Lösen der Spannschrauben 40 wird der untere Gehäuseteil 34 ein Stück weit nach unten abgesenkt, so dass die untere Batterie 22 nach vorne gezogen werden kann.

Um die untere Batterie 22 in der heraus gezogenen Lage handhabbar zu machen, sind die seitlichen Rahmenbleche 20 an ihrer dem Halterahmen 26 abgewandten Vorderseite L-förmig abgewinkelt. Diese nach vorne ragende Verlängerung der Rahmenbleche 20 dient bei eingebauter Batterie in der in den Figuren 2 bis 7 gezeigten Ausführungsform als Rahmen für zwei Trittstufen 46, die an einem kastenförmigen Halterahmen 48 befestigt sind. Dieser Halterahmen 48 mit den daran befestigten Trittstufen 46 kann aus seiner vertikalen Lage (Fig. 2) zur Ablage der unteren Batterie 22 um ca. 90 Grad nach vorne verschwenkt werden (Fig. 3), wodurch eine Auflage bzw. eine klappbare Stützeinrichtung 49 für die heraus ziehbare untere Batterie 22 gebildet ist. Zwei Spannseile 50 definieren den maximalen Schwenkbereich des Halterahmens 48 bzw. der Stützeinrichtung 49. Ein Ver- bzw. Entriegelungshaken 52 dient zur lösbaren Verriegelung des Halterahmens 48 in seiner nach oben geschwenkten, an den L-förmigen Auslegern der Rahmenbleche 20 anliegenden Lage.

Wenn auch die schematische Darstellung der Fig. 3 die klappbare Stützeinrichtung 49 mit am Halterahmen 48 angebrachten Trittstufen 46 zeigt, so ist dies für die gewünschte Funktion der Stützeinrichtung 49 als klappbare Auflagefläche für die untere Batterie 22 nicht unbedingt notwendig. Die Stützeinrichtung 49 kann wahlweise lediglich aus einem Rahmenabschnitt o. dgl. bestehen, an dem keine Trittstufen angebracht sind. Eine solche Variante eignet sich bspw. für Nutzfahrzeuge mit geschlossenem Kasten- oder mit einem Pritschenaufbau, bei denen keine Trittstufen zum Besteigen des Fahrzeugrahmens notwendig sind.

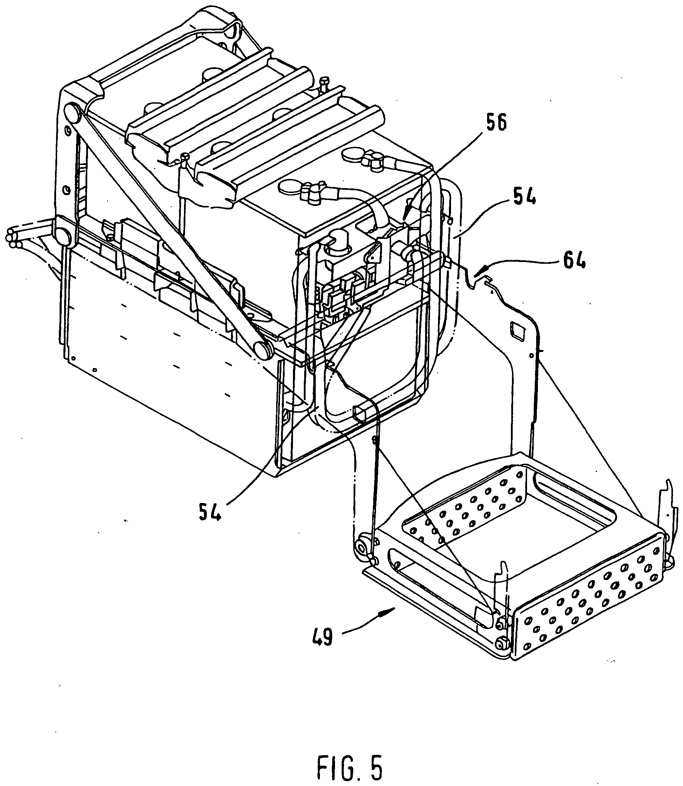

Anhand der Fig. 5 wird eine mögliche Anordnung bzw. Verlegung von elektrischen Anschlussleitungen 54 verdeutlicht, die insbesondere bei der unteren Batterie 22 ausreichend lang und so verlegt sein sollten, dass die untere Batterie 22 ohne Abklemmen der Anschlussleitungen 54 nach vorne auf den umgeklappten Halterahmen 48 gezogen werden kann. Ein optionales Elektrikmodul 56 kann an einer vorderen Stirnseite der oberen Batterie 24 bzw. in deren Höhe an den Rahmenblechen 20 befestigt sein, wie dies in Fig. 5 beispielhaft dargestellt ist. Das Elektrikmodul 56 kann bspw. alle notwendigen elektrischen Komponenten aufnehmen, so dass eine einfache und schnelle Vormontierbarkeit sowie eine gute Zugänglichkeit für Wartungszwecke gegeben ist.

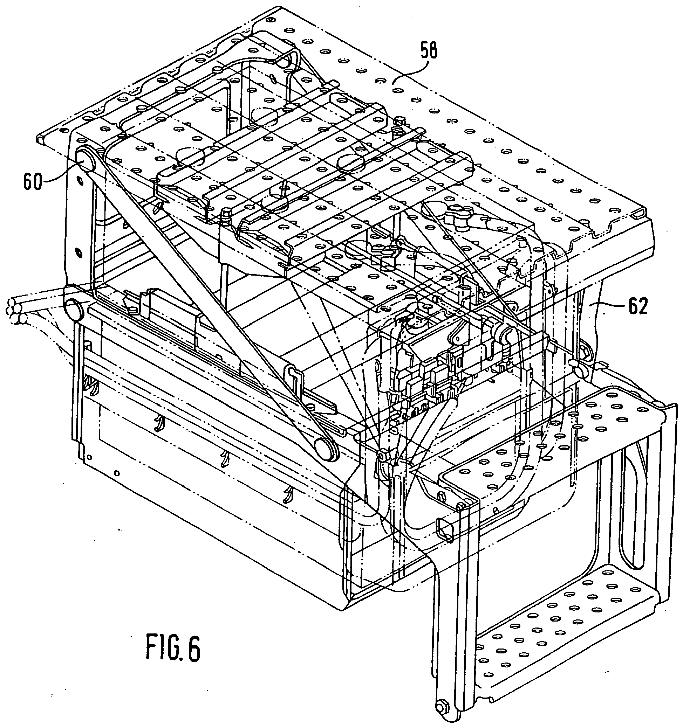

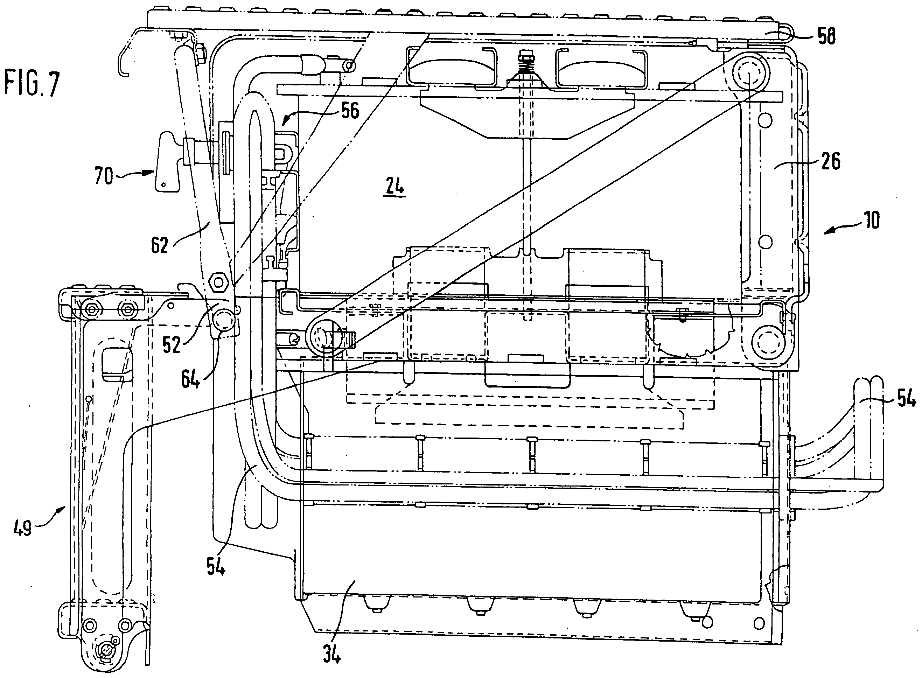

Die Figuren 6 und 7 verdeutlichen eine weitere Ausführungsvariante der erfindungsgemäßen Anordnung 10, bei der oberhalb der zweiten Batterie 24 und über deren Klemmbügel 42 eine klappbare Trittplattform 58 angeordnet ist. Diese Variante eignet sich insbesondere für Zugmaschinen von Sattelzügen o. dgl., bei denen der Raum oberhalb der Batterien 22 und 24 als begehbarer Bereich genutzt werden kann. Die gelochte Trittplattform 58 kann um eine Schwenkachse 60 im Bereich des oberen Randes des mit dem Rahmenlängsträger des Nutzfahrzeuges verschraubbaren hinteren Halterahmens 26 verschwenkt werden, so dass der vordere Bereich nach oben geklappt werden kann. Die Schwenkachse 60 kann insbesondere mit den oberen Anlenkpunkten der beiden Zugstreben 30 zusammen fallen, mit denen die beiden Rahmenbleche 20 in ihrer Lage gehalten werden. Wahlweise kann die Trittplattform 58 zur noch besseren Zugänglichkeit abgenommen werden.

In einer weiteren, hier nicht gezeigten Ausführungsform kann der Batteriekastendeckel 66 fest mit der Trittplattform 58 verbunden sein. Dadurch muss nur eine Einheit bewegt werden, wenn durch das Abnehmen der Trittplattform 58 und des Batteriekastendeckels 66 eine bessere Zugänglichkeit geschaffen werden muss.

Der vordere Bereich der Trittplattform 58 stützt sich über einen U-förmigen Stützbügel 62 in Aufnahmen 64 (vgl. Fig. 5) im vorderen oberen Bereich der Rahmenbleche 20 ab. Der Stützbügel 62 ist in diesen Aufnahmen 64 mittels des Ver- bzw. Entriegelungshakens 52 verriegelbar, so lange sich der Halterahmen 48 mit den Trittstufen 46 in der verriegelten vertikalen Lage befindet. Die Figuren 6 und 7 zeigen jeweils die in horizontaler Lage befindliche Trittplattform 58, die dabei die obere Batterie 24 bedeckt.

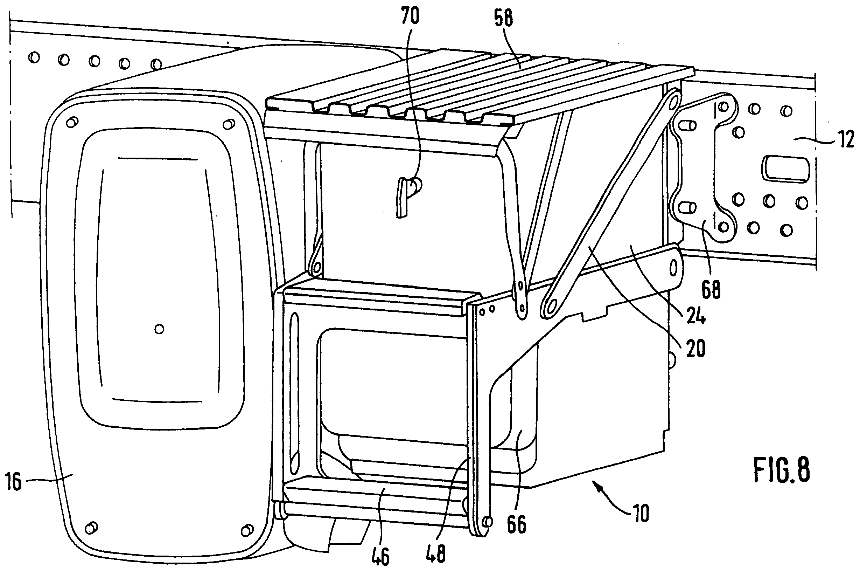

Die schematische Perspektivdarstellung der Fig. 8 verdeutlicht nochmals die Platzierung der erfindungsgemäßen Anordnung 10 am Rahmenlängsträger 12 des Nutzfahrzeugrahmens. Gezeigt ist eine Variante für eine Sattelzugmaschine, bei der die obere Batterie 24 mit der Trittplattform 58 abgedeckt ist. Es ist erkennbar, dass die Rahmenbleche 20 und die über den Halterahmen 48 daran schwenkbar gelagerten Trittstufen 46 den Schalldämpfer 16 der Abgasanlage seitlich kaum überragen. Die beiden Batterien 22 und 24 sind im gezeigten Ausführungsbeispiel der Fig. 8 mit einem Batteriekastendeckel 66 versehen, der die Batterien 22 und 24 sowie deren elektrische Anschlüsse als auch das Elektrikmodul 56 abdeckt und vor Umwelteinflüssen schützt. Der Batteriekastendeckel 66 kann wahlweise mit dem Gehäuserahmen 18 verschraubt sein. Auch eine Klemmbefestigung ist möglich, bspw. mittels der klappbaren Stützeinrichtung 49. Wird diese nach unten abgeklappt, wird eine Arretierung des Deckels 66 freigegeben, so dass der Batteriekastendeckel 66 ohne Zuhilfenahme von Werkzeug abgenommen werden kann.

Die Fig. 8 verdeutlicht zudem die Befestigung des rückseitigen Halterahmens 26 am rechten Rahmenlängsträger 12 des Fahrzeugs über zwei Winkelbleche 68. Die gesamte Anordnung 10 kann somit vormontiert und mit nur vier Schrauben am Fahrzeug befestigt werden.

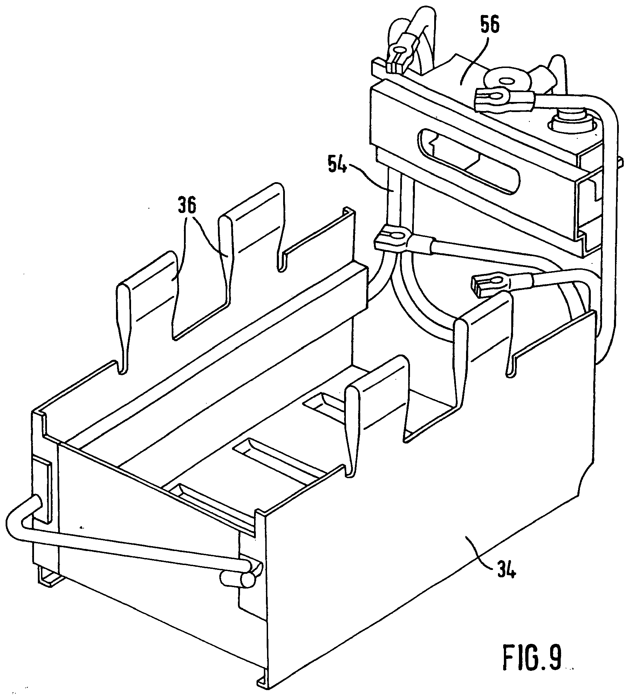

Die schematische Perspektivdarstellung der Fig. 9 verdeutlicht die Anordnung des Elektrikmoduls 56 sowie der Anschlussleitungen 54, über welche die Batterien 22 und 24 mit dem Elektrikmodul 56 verbunden sind. Die Anschlussleitungen 54 für die untere Batterie 22 sind ausreichend lang dimensioniert und so verlegt, dass die Batterie 22 teilweise aus dem U-förmigen Gehäuseteil 34 heraus gezogen werden kann. Das Elektrikmodul 56 kann vorzugsweise in Höhe der nach außen weisenden Stirnseite der oberen Batterie 24 (nicht dargestellt) befestigt sein. Die Befestigung erfolgt zweckmäßigerweise wahlweise an der Batterie 24, an den Rahmenblechen 20 oder an einem anderen geeigneten Bauteil.

Die Figuren 7 und 8 verdeutlichen einen optionalen Batterietrennschalter 70, der vorzugsweise am Elektrikmodul 56 angeordnet und ggf. von außen zugänglich sein kann. Anhand der schematischen Darstellung der Fig. 8 ist erkennbar, dass der Batterietrennschalter 70 auch bei aufgesetztem Batteriekastendeckel 66 zugänglich bleiben kann.

## Patentansprüche

1. Anordnung von mindestens zwei übereinander gestapelten elektrischen Energiespeichern (14) an einem Fahrzeug, insbesondere an einem Nutzfahrzeug mit einem Fahrgestell in Rahmenbauweise, **dadurch gekennzeichnet, dass** ein zuunterst angeordneter Energiespeicher (14; 22) in horizontaler Richtung verschiebbar und unter einem darüber angeordneten Energiespeicher (14; 24) zumindest teilweise herausziehbar ist, wobei der zuunterst angeordnete Energiespeicher (14; 22) in einer unter dem darüber angeordneten Energiespeicher (14; 24) herausgezogenen Lage auf einer klappbaren Stützeinrichtung (49) absetzbar ist, wobei die klappbare Stützeinrichtung (49) mindestens eine Trittstufe (46) zum Besteigen des Fahrzeugs aufweist.

2. Anordnung nach Anspruch 1, **dadurch gekennzeichnet, dass** die mindestens zwei elektrischen Energiespeicher (14; 22, 24) in einem Gehäuserahmen (18) gehalten sind, der an einem Rahmenabschnitt des Fahrzeuges befestigbar ist.

3. Anordnung nach Anspruch 2, **dadurch gekennzeichnet, dass** der zuoberst angeordnete Energiespeicher (14; 24) auf einer Halteplattform (32) ruht, die fest im Gehäuserahmen (18) verankert ist.

4. Anordnung nach Anspruch 2 oder 3, **dadurch gekennzeichnet, dass** der zuunterst angeordnete Energiespeicher (14; 22) in einem mit dem Gehäuserahmen (18) verbundenen unteren Gehäuseteil (34) angeordnet und zumindest teilweise aus diesem herausziehbar ist.

5. Anordnung nach Anspruch 4, **dadurch gekennzeichnet, dass** der zuunterst angeordnete Energiespeichers (14; 22) über eine Gleitführung gegenüber dem unteren Gehäuseteil (34) verschiebbar ist.

6. Anordnung nach einem der voranstehenden Ansprüche, **dadurch gekennzeichnet, dass** über dem zuoberst angeordneten Energiespeicher (14; 24) eine Trittplattform (58) angeordnet ist.

7. Anordnung nach Anspruch 6, **dadurch gekennzeichnet, dass** die Trittplattform (58) einen mit dem Gehäuserahmen (18) verbundenen und/oder aufklappbaren Batteriekastendeckel bildet.

8. Anordnung nach Anspruch 6 oder 7, **dadurch gekennzeichnet, dass** die Trittplattform (58) in ihrer den zuoberst angeordneten Energiespeicher (14; 24) abdeckenden horizontalen Lage verriegelbar ist.

9. Anordnung nach einem der voranstehenden Ansprüche, **dadurch gekennzeichnet, dass** die Trittplattform (58) in ihrer horizontalen Lage mittels der klappbaren Stützeinrichtung (49) verriegelbar ist.

10. Anordnung nach einem der voranstehenden Ansprüche, **dadurch gekennzeichnet, dass** die elektrischen Energiespeicher (14; 22, 24) mit einem Fahrzeugbordnetz über Anschlussleitungen (54) gekoppelt sind, die auch bei herausgezogenem unteren Energiespeicher (14; 22) an diesem angeschlossen bleiben.

11. Anordnung nach einem der voranstehenden Ansprüche, **dadurch gekennzeichnet, dass** dem Gehäuserahmen (18) ein zentrales Elektrikmodul (56) zugeordnet ist, das in Höhe des zuoberst angeordneten Energiespeichers (14; 24) positioniert ist.

12. Anordnung nach Anspruch 11, **dadurch gekennzeichnet, dass** das Elektrikmodul (56) an einer nach außen weisenden Stirnseite des zuoberst angeordneten Energiespeichers (14; 24) angeordnet und zu dessen Entnahme abnehmbar am Gehäuserahmen (18) bzw. am zuoberst angeordneten Energiespeicher (14; 24) gehaltert ist.

13. Anordnung nach einem der voranstehenden Ansprüche, **dadurch gekennzeichnet, dass** der zuoberst angeordnete Energiespeicher (14; 24) und/oder der zuunterst angeordnete Energiespeicher (14; 22) mit einem abnehmbaren und/oder verriegelbaren Batteriekastendeckel (66) zumindest teilweise abgedeckt sind.

14. Anordnung nach Anspruch 13, **dadurch gekennzeichnet, dass** das Elektrikmodul (56) vom Batteriekastendeckel (66) abgedeckt ist.

15. Anordnung nach Anspruch 1, 2, 3, 4, 5, **dadurch gekennzeichnet, dass** der obere Energiespeicher 24 zusammen mit dem unteren Energiespeicher 22 über eine gemeinsame Klemmeinrichtung 44 auf dem Grundträger 18 befestigt ist und gegebenenfalls nach deren Lösen entfernt bzw. bewegt werden kann.

## Claims

1. Arrangement of at least two electrical energy stores (14), which are stacked one above the other, on a vehicle, in particular a utility vehicle with a chassis of frame-type construction, **characterized in that** an energy store (14; 22) which is arranged right at the bottom can be displaced in the horizontal direction and can be at least partially withdrawn beneath an energy store (14; 24) which is arranged above it, wherein the energy store (14; 22) which is arranged right at the bottom can be set down on a foldable supporting device (49) in a position in which the said energy store is withdrawn beneath the energy store (14; 24) which is arranged above it, wherein the foldable supporting device (49) has at least one step tread (46) for boarding the vehicle.

2. Arrangement according to Claim 1, **characterized in that** the at least two electrical energy stores (14; 22, 24) are held in a housing frame (18) which can be fastened to a frame section of the vehicle.

3. Arrangement according to Claim 2, **characterized in that** the energy store (14; 24) which is arranged right at the top rests on a holding platform (32) which is fixedly anchored in the housing frame (18).

4. Arrangement according to Claim 2 or 3, **characterized in that** the energy store (14; 22) which is arranged right at the bottom is arranged in a lower housing part (34), which is connected to the housing frame (18), and can be at least partially withdrawn from the said lower housing part.

5. Arrangement according to Claim 4, **characterized in that** the energy store (14; 22) which is arranged right at the bottom can be displaced in relation to the lower housing part (34) by means of a sliding guide.

6. Arrangement according to one of the preceding claims, **characterized in that** a step platform (58) is arranged above the energy store (14; 24) which is arranged right at the top.

7. Arrangement according to Claim 6, **characterized in that** the step platform (58) forms a battery box cover which is connected to the housing frame (18) and/or can be swung open.

8. Arrangement according to Claim 6 or 7, **characterized in that** the step platform (58) can be locked in its horizontal position which covers the energy store (14; 24) which is arranged right at the top.

9. Arrangement according to one of the preceding claims, **characterized in that** the step platform (58) can be locked in its horizontal position by means of the foldable supporting device (49).

10. Arrangement according to one of the preceding claims, **characterized in that** the electrical energy stores (14; 22, 24) are coupled to an on-board vehicle electrical system by means of connection lines (54) which remain connected to the lower energy store (14; 22) even when said lower energy store is withdrawn.

11. Arrangement according to one of the preceding claims, **characterized in that** the housing frame (18) has an associated central electrical module (56) which is positioned level with the energy store (14; 24) which is arranged right at the top.

12. Arrangement according to Claim 11, **characterized in that** the electrical module (56) is arranged on an end side of the energy store (14; 24) which is arranged right at the top, which end side faces outward, and in order to be extracted is held in a removable manner on the housing frame (18) or on the energy store (14; 24) which is arranged right at the top.

13. Arrangement according to one of the preceding claims, **characterized in that** the energy store (14; 24) which is arranged right at the top and/or the energy store (14; 22) which is arranged right at the bottom are/is at least partially covered by a removable and/or lockable battery box cover (66).

14. Arrangement according to Claim 13, **characterized in that** the electrical module (56) is covered by the battery box cover (66).

15. Arrangement according to Claims 1, 2, 3, 4 and 5, **characterized in that** the upper energy store 24, together with the lower energy store 22, is fastened on the main support 18 by means of a common clamping device 44 and, if desired, can be removed or moved after the said clamping device is released.

## Revendications

1. Agencement d'au moins deux accumulateurs d'énergie électrique (14) empilés les uns sur les autres sur un véhicule, notamment sur un véhicule utilitaire comportant un châssis réalisé sous forme d'ossature, **caractérisé en ce qu'**un accumulateur d'énergie disposé en position basse (14 ; 22) peut être déplacé dans la direction horizontale et peut être au moins partiellement extrait en-dessous d'un accumulateur d'énergie (14 ; 24) disposé sur celui-ci, dans lequel l'accumulateur d'énergie disposé en position basse (14 ; 22) à une position extraite en-dessous de l'accumulateur d'énergie (14 ; 24) disposé sur celui-ci peut être déposé sur un moyen de support repliable (49), dans lequel le moyen de support repliable (49) comporte au moins une marchepied (46) permettant de monter dans le véhicule.

2. Agencement selon la revendication 1, **caractérisé en ce que** les au moins deux accumulateurs d'énergie électriques (14 ; 22, 24) sont maintenus dans un châssis de boîtier (18) qui peut être fixé sur une partie de châssis du véhicule.

3. Agencement selon la revendication 2, **caractérisé en ce que** l'accumulateur d'énergie disposé en position haute (14 ; 24) repose sur une plate-forme de support (32) qui est solidement ancrée dans le châssis de boîtier (18).

4. Agencement selon la revendication 2 ou 3, **caractérisé en ce que** l'accumulateur d'énergie disposé en position basse (14 ; 22) est disposé dans une partie inférieure de boîtier (34) reliée au châssis de boîtier (18) et peut être extrait au moins partiellement de celui-ci.

5. Agencement selon la revendication 4, **caractérisé en ce que** de l'accumulateur d'énergie disposé en position basse (14 ; 22) peut être déplacé par rapport à la partie inférieure de boîtier (34) par l'intermédiaire d'une glissière.

6. Agencement selon l'une quelconque des revendications précédentes, **caractérisé en ce qu'**une plate-forme d'accès (58) est disposée au-dessus de l'accumulateur d'énergie disposé en position haute (14 ; 24).

7. Agencement selon la revendication 6, **caractérisé en ce que** la plate-forme d'accès (58) forme un capot de boîtier de batterie relié au châssis de boîtier (18) et/ou repliable avec celui-ci.

8. Agencement selon la revendication 6 ou 7, **caractérisé en ce que** la plate-forme d'accès (58) est verrouillable à sa position horizontale recouvrant l'accumulateur d'énergie disposé en position haute (14 ; 24).

9. Agencement selon l'une quelconque des revendications précédentes, **caractérisé en ce que** la plate-forme d'accès (58) est verrouillable à sa position horizontale à l'aide du moyen de support repliable (49).

10. Agencement selon l'une quelconque des revendications précédentes, **caractérisé en ce que** les accumulateurs d'énergie électriques (14 ; 22, 24) sont couplés à un réseau de bord du véhicule par l'intermédiaire de lignes de raccordement (54) qui restent également raccordées à celui-ci lorsque l'accumulateur d'énergie inférieur (14 ; 22) est extrait.

11. Agencement selon l'une quelconque des revendications précédentes, **caractérisé en ce qu'**un module électrique central (56) est associé au châssis de boîtier (18) et est positionné à la hauteur de l'accumulateur d'énergie disposé en position haute (14 ; 24).

12. Agencement selon la revendication 11, **caractérisé en ce que** le module électrique (56) est disposé sur une face avant tournée vers l'extérieur de l'accumulateur d'énergie disposé en position haute (14; 24) et est maintenu amovible pour son extraction sur le châssis de boîtier (18) ou sur l'accumulateur d'énergie disposé en position haute (14 ; 24).

13. Agencement selon l'une quelconque des revendications précédentes, **caractérisé en ce que** l'accumulateur d'énergie disposé en position haute (14 ; 24) et/ou l'accumulateur d'énergie disposé en position basse (14 ; 22) sont au moins partiellement recouverts par un capot de boîtier de batterie (66) amovible et/ou verrouillable.

14. Agencement selon la revendication 13, **caractérisé en ce que** le module électrique (56) est recouvert par le capot de boîtier de batterie (66).

15. Agencement selon la revendication 1, 2, 3, 4, 5, **caractérisé en ce que** l'accumulateur d'énergie 24 supérieur en association avec l'accumulateur d'énergie 22 inférieur est fixé par l'intermédiaire d'un moyen de serrage commun 44 sur le support de base 18 et peut le cas échéant être enlevé ou déplacé après qu'il a été séparé.
